# EUROPEAN PATENT APPLICATION

(11) **EP 2 090 264 A2**
(43) Date of publication of application: **19.08.2009**
(21) Application number: 09007814.8
(22) Date of filing: 27.02.2006
(51) Int. Cl.: A61C 8/00

(54) **Dental implant**

(30) Priority: 28.02.2005 US 67995
(62) Divisional of application: 06251038.3
(71) Applicant: Ho, Chih-Chung, No. 224, Yen-Ping First Road Cishan Township Kaohsiung County (TW)
(72) Inventor: Ho, Chih-Chung, No. 224, Yen-Ping First Road Cishan Township Kaohsiung County (TW)
(74) Representative: Nicholls, Michael John

(57) **Abstract**

The present invention relates to a dental implant. The dental implant comprises: a central portion, at least one proximal plate-like projection and at least one fin. The central portion has a first section, a second section, a horizontal direction and a vertical direction. The proximal plate-like projection projects from the first section of the central portion along the horizontal direction and extends along the vertical direction. The fin projects from the second section of the central portion along the horizontal direction. The dental implant of the present invention pays more attention to the horizontal force that is usually ignored by other systems. By the design of generally vertical proximal plate-like projection(s) and clearances, the implant should deal the force from occlusion more correctly.

## Description

The invention relates to a dental implant, more particularly, a dental implant with proximal plate-like projections.

The occlusal force can be divided into vertical force and horizontal force. The vertical force for the implant is a compression force at the bottom and a shearing force at the sides. The horizontal force is a tipping force for the implant, which means both the ends are most forced in different directions.

Since the horizontal force toward the proximal side is co-bolstered by the adjacent teeth (or implants), such force is less detrimental to the alveolar bone. The dental implant catches the bone to resist the occlusal force. Therefore, to have implants catch enough alveolar bone for the occlusal force, yet keep the alveolar bone from being destroyed is the basic and most important consideration for dental implant design.

Since the advent of titanium dental implant, many dental implants retain the shape of natural root. But as a matter of fact, the supporting mechanisms of the natural tooth and that of the implant are not the same. The natural tooth is suspended in the bone by the ligaments, the implant is "fixed" to the bone. Mimicking the morphology of the root of the tooth does not make sense.

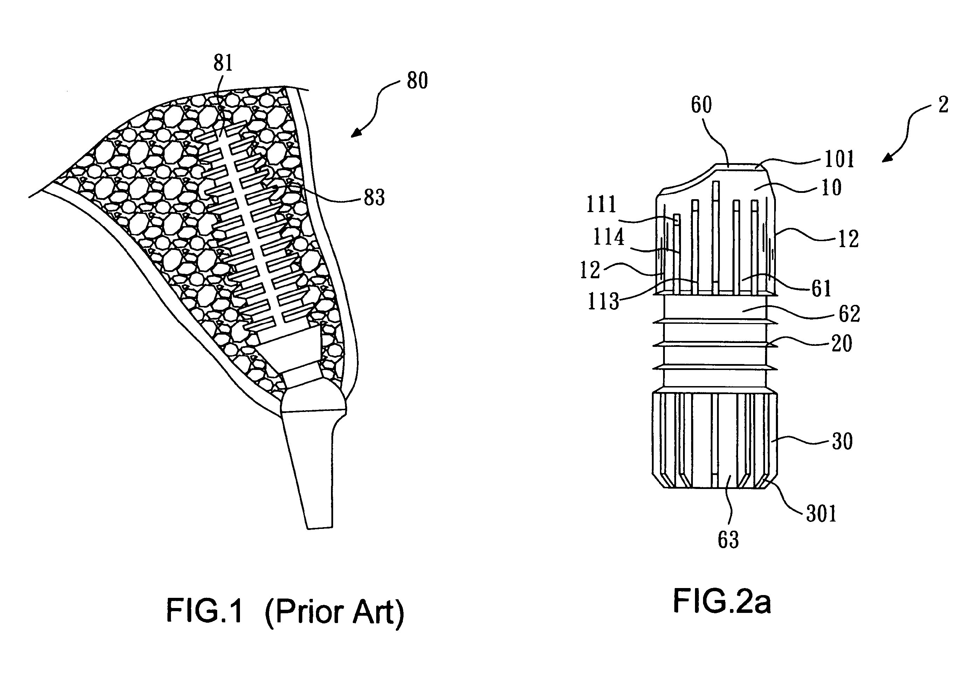

Referring to FIG. 1 of the accompanying drawings, the conventional dental implant 80 comprises a central portion 81 and a plurality of fins 83. The central portion 81 is a tapering shape cylinder. Tapering of the central portion 81 of the dental implant 80 would reduce the capability to resist the vertical force and the horizontal force. And as is seen clinically, the deeper portion of alveolar bone always has ample space of the implant. Another drawback for many contemporary implants is the threads or fins 83. The threads or fins are basically horizontal projections from the central portion 81. The fins (horizontal projections) catch bone in such manners that they are significantly less equipped for horizontal forces than for vertical forces. This may explain why the successful rate of implant in the maxilla is always lower than that in the mandible. The implants in the maxilla receive more horizontal force than those in the mandible.

U.S. Pat. No. 4,738,623 discloses a dental implant system which is considered by many dentists to be one of the best implant systems, but it also has the disadvantages mentioned above. Like other implants, the entrance to the bone is the most vulnerable. The conventional dental implant deals with the problem seriously. According to its instruction manual, the conventional dental implant is implanted 1mm ∼ 2mm below the alveolar crest. Later, some of the bone is removed, and the abutment and crown is connected to the conventional dental implant. But as is clinically observed, in the long run the bone retreats to the shoulder of the conventional dental implant. Although the material of the implant and that of the abutment post are the same, the abutment post does not get osseointegrated. There may be micro-rotation of the abutment post. An un-osseointegrated post in the bone is a highway for hostile bacteria. In some cases, the bony deteriorations continue, and implant exposures are inevitable. The exposures are often on the horizontal-force-bearing side. Such exposure embarrasses the patient and is an ordeal for the dentist.

The present invention relates to a dental implant. The dental implant comprises: a central portion, at least one proximal plate-like projection and at least one fin. The central portion has a first section, a second section, a horizontal direction and a vertical direction. The proximal plate-like projection projects from the first section of the central portion along the horizontal direction and extends along the vertical direction. The fin projects from the second section of the central portion along the horizontal direction.

The dental implant of the present invention pays more attention to the horizontal force that is usually ignored by the other systems. By the design of the proximal plate-like projection and clearances on buccal and lingual sides, the dental implant may deal with the force from occlusion more correctly.

The proximal plate-like projection catches more bone for the horizontal force and escapes from most of the vertical force. The plate-like projection arises from the cylinder toward distal or mesial direction. On the buccal and lingual sides at the level of the proximal plate-like projection, there are no proximal plate-like projections. Because the buccal and lingual bone plates are always thin and are also the weak points in dental implantology, the bony plates had better not to bear too much force.

The dental implant further comprises a neck disposed on the first section of the central portion. Continuing with the neck, the clearances and the neck provide more space for the bony plates and carry less force to the plates. The implant provides intact space for the thin plates that are not disturbed by any projection, and would help to meet esthetic demand because the chance of neck exposure is reduced. The implant effectively deals with the horizontal force by the plate-like projection(s) which are surrounded by ample bony structure.

The invention will be further described by way of example with reference to the accompanying drawings, in which:-
FIG. 1 is a conventional dental implant of the prior art after healing and the dot line shows the later retreated condition.
FIG. 2a is a proximal side elevational view of a dental implant according to a first embodiment of the invention.
FIG. 2b is a buccal side elevational view of the dental implant according to the first embodiment of the invention.
FIG. 2c is a downward perspective view of the dental implant according to the first embodiment of the invention.
FIG. 2d is a top plan view of the dental implant according to the first embodiment of the invention.
FIG. 2e is an upward perspective view of the dental implant according to the first embodiment of the invention.
FIG. 2f shows the dental implant according to the first embodiment of the invention after healing.
FIG. 3a is a proximal side elevational view of a dental implant according to a second embodiment of the invention.
FIG. 3b is a buccal side elevational view of the dental implant according to the second embodiment of the invention.
FIG. 3c is a downward perspective view of the dental implant according to the second embodiment of the invention.
FIG. 3d is a top plan view of the dental implant according to the second embodiment of the invention.
FIG. 3e is an upward perspective view of the dental implant according to the second embodiment of the invention.
FIG. 4 is a partial enlarged proximal view of a trimming neck according to the invention.
FIGs. 5a, 5b and 5c are the top plan views of the different arrangements of the proximal plate-like projections.
FIG. 6 is a proximal side elevational view of a dental implant having proximal plate-like projections with declined angle.

Before the description of the dental implant of the invention, some terminology must be clearly defined. The term "lower" is not related to gravity, it means in the deeper bone, and "upper" means it's proximal to the gingival or crown. And "buccal" means buccal or facial, "lingual" means lingual or palatal. "Vertical" means in the direction along with the longitudinal axis of the dental implant, "horizontal" means in the direction that is perpendicular to "vertical".

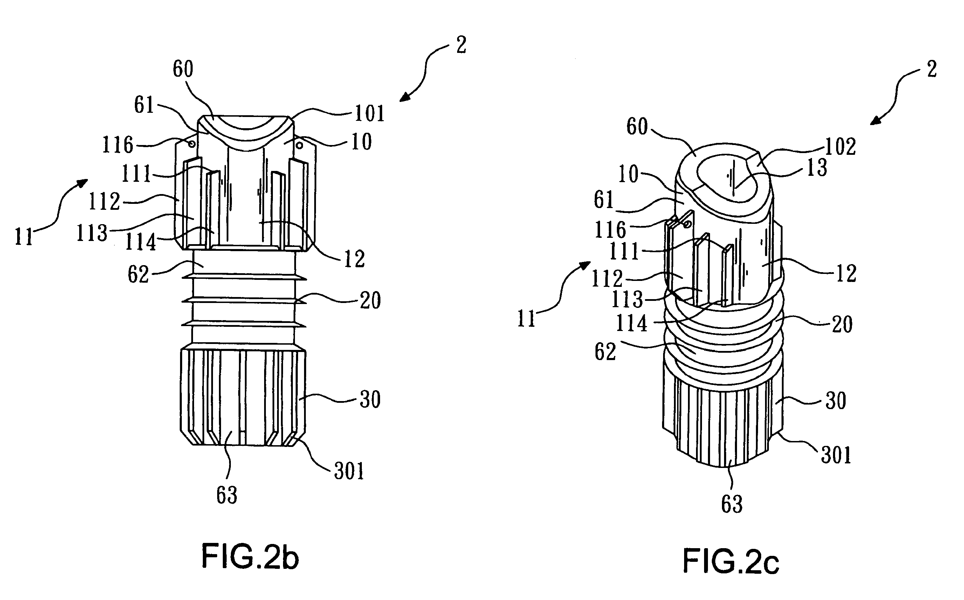

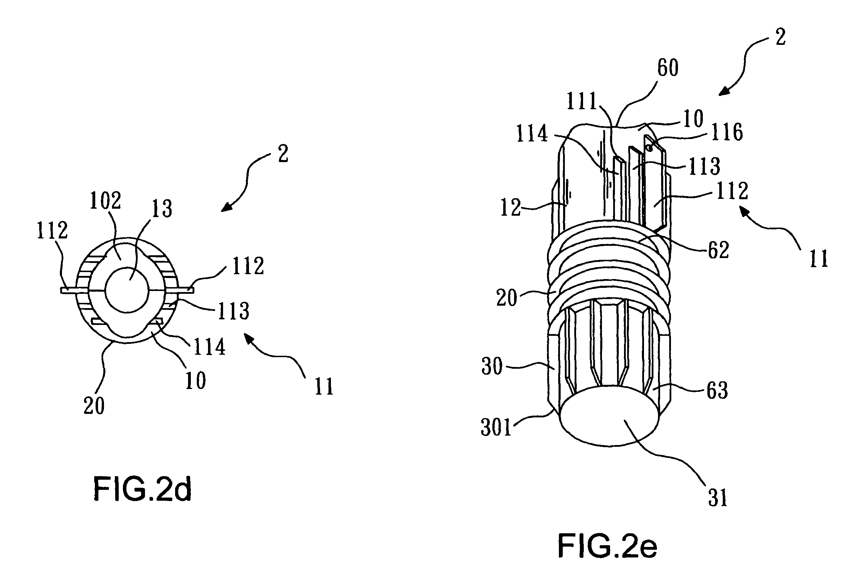

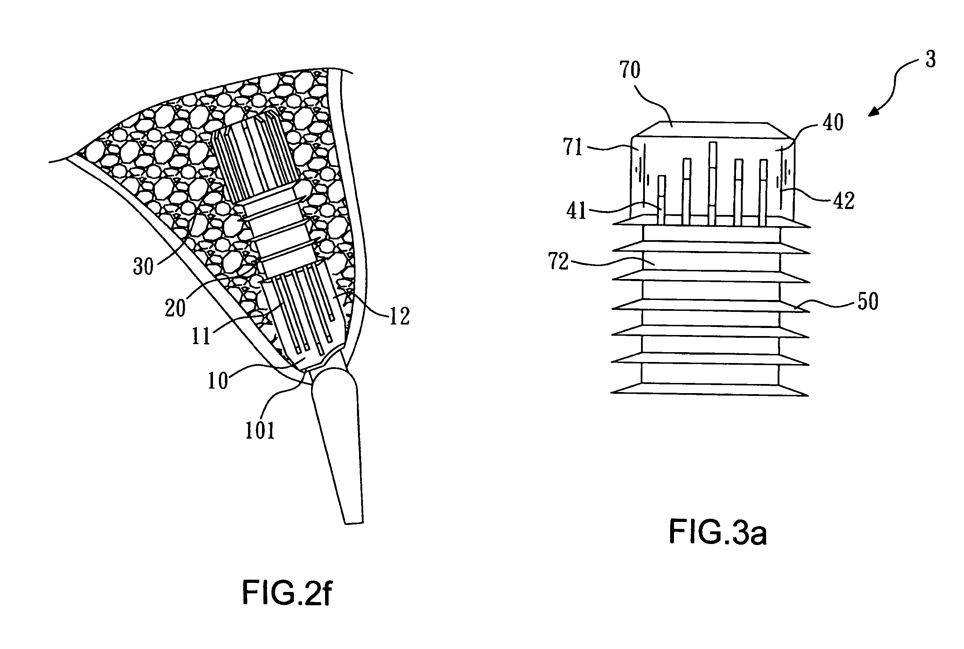

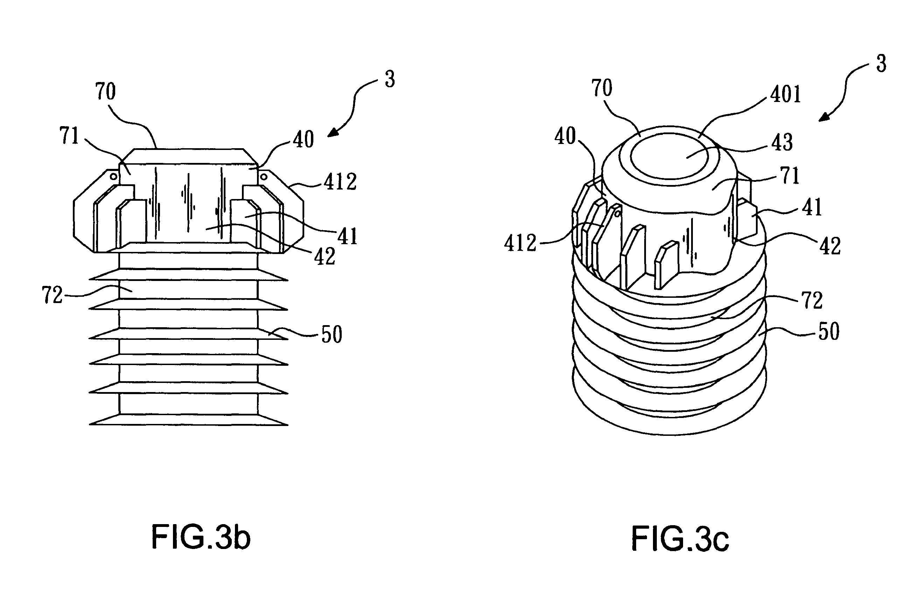

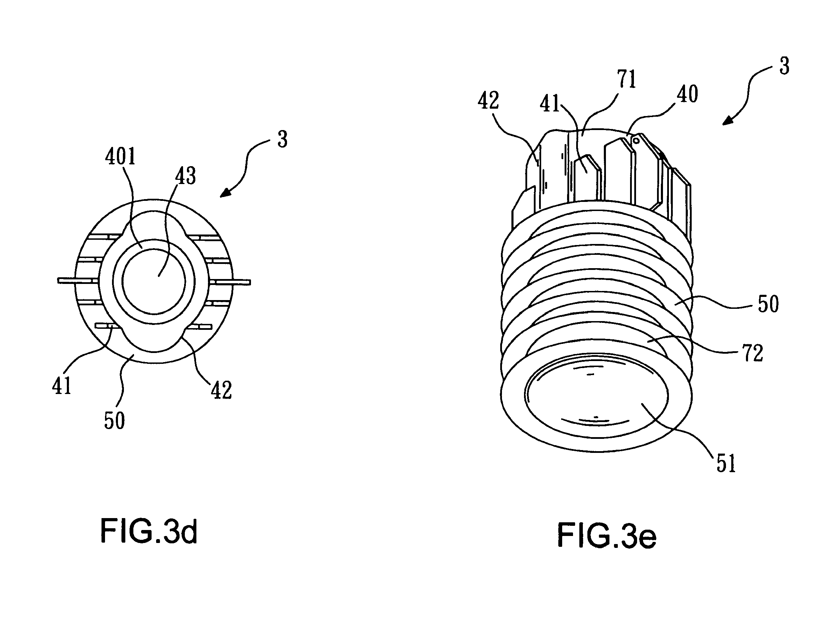

Referring to FIGs. 2a, 2b, 2c, 2d, 2e and 2f, they show a dental implant according to a first embodiment of the invention. The dental implant 2 that would receive more horizontal force than vertical force (from occlusion) is named Type A implant. Generally the Type A implant would be for the maxillary anteriors. Referring to FIGs. 3a, 3b, 3c, 3d and 3e, they show a dental implant according to a second embodiment of the invention. The dental implant 3 that would receive more vertical force is named Type B implant.

The dental implant of the present invention is generally a cylindrical and un-tapered implant that is later to connect an abutment for the prosthesis.

Referring to FIGs. 2a to 2f again, the dental implant 2 comprises: a central portion 60, at least one upper proximal plate-like projection 11, at least one fin 20 and at least one lower proximal plate-like projection 30. The central portion 60 has a first section 61, a second section 62, a third section 63, a horizontal direction and a vertical direction. In the embodiment, the central portion 60 is a cylindrical shape and is not tapered.

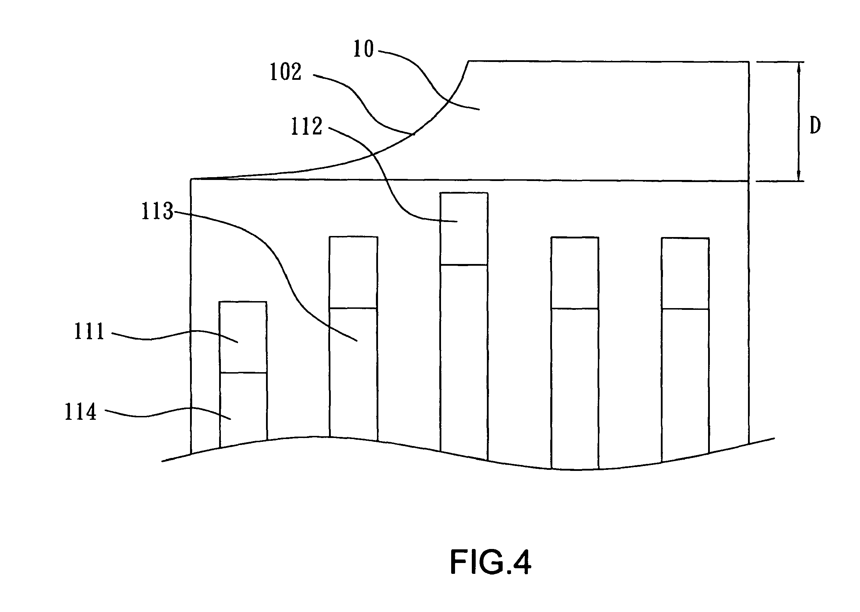

The central portion 60 further comprises a neck 10 disposed on the first section 61. The height of the neck 10 is about 0.5mm to 3.0mm. The neck 10 has an edge 101 with some rounding, and the edge 101 is inward and upward to the longitudinal axis of the dental implant. The neck 10 had better be as narrow as possible if it's mechanically approved. With such design the neck 10 has a rim 102, and the rim 102 on the neck 10 would be narrow. The rim 102 toward the buccal side is trimmed to simulate the curvature of buccal gingival. Referring to FIGs. 2a and 4, the trimming rim 102 begins from proximal sides downwardly to the buccal side, and is preferably concave. The trimming rim 102 would allow the surgeon not to bury the implant deep in the bone without worrying the exposure of dental implant on the buccal side. And the trimming rim 102 is preferably to match the asymmetrically resorbed ridge. The depth of the trimming rim 102 is between 0.5mm to 2mm.

Following the neck 10 are the upper proximal plate-like projection 11 and the buccal and lingual clearances 12. The upper proximal plate-like projection 11 projects from the first section 61 of the central portion 60 along the horizontal direction, and extends along the vertical direction. In the embodiment, a plurality of upper proximal plate-like projections are mounted on the first section 61 of the central portion 60. The upper proximal plate-like projections 11 preferably are comprehensively pruned at the upper edge to form a pruned upper edge 111.

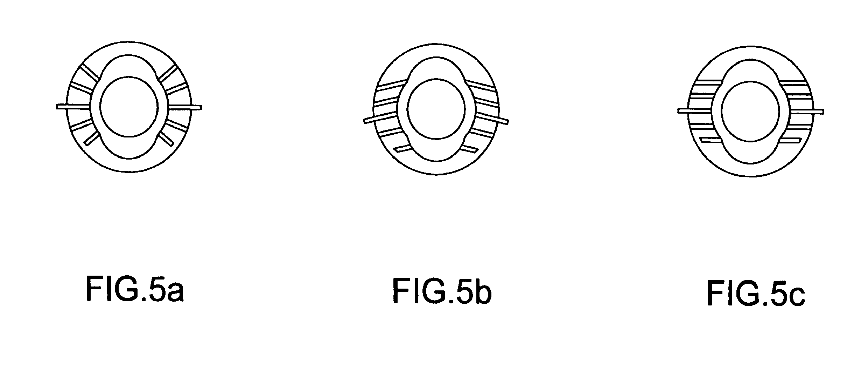

Referring to FIGs. 5a, 5b and 5c, they show the different arrangements of the upper proximal plate-like projection according to the invention. The upper plate-like projections arise from the central portion 60 at roughly 90 degrees to the tangent of the central portion 60 as shown in FIG. 5a, or at projecting angels that are easily manufactured and still can catch a lot of bone for the horizontal force, as shown in FIG. 5b and FIG. 5c. The upper plate-like projections would preferably not extend beyond the tangent line of buccal or lingual border. The plate-like projection(s) are good at catching the bone for the horizontal force and escape from the vertical force. Such design can prevent from overloading. The proximal plate-like projection is parallel to an adjacent proximal plate-like projection adjacent to the proximal plate-like projection.

Referring to FIGs. 2a to 2f again, the upper proximal plate-like projection 11 is disposed on a proximal side of the first section 61, and the first section 61 has a buccal clearance 12 and a lingual clearance 12 without the upper proximal plate-like projection, the buccal and lingual clearances 12 are respectively disposed on a buccal side and a lingual side of the first section 61. That is, on the buccal and lingual sides at the level of the upper plate-like projection 11, there are no upper proximal plate-like projections. The clearance 12 is a protrusion. Because the buccal and lingual bone plates are always thin and are also the weak points in dental implantology, the plates had better not to bear too much force. Continuing with the neck 10, the clearances 12 and the neck 10 provide more space for the bony plates and carry less force to the plates.

The dental implant of the invention effectively deals with the horizontal force by the proximal plate-like projections 11 which are surrounded by ample bony structure. Thus the chance of bony deterioration is reduced. The length of the first section 61 with the upper proximal plate-like projection is about 1/4 to 2/5 of the total length of the central portion 60. Because the horizontal force is least felt in the middle section of the central portion, the plate-like projections do not appear in the middle section of the central portion.

The proximal plate-like projections comprise at least one positioning proximal plate-like projection 112, the positioning proximal plate-like projection 112 extends outside the outer diameter of the fin 20. Therefore, the width of the positioning proximal plate-like projection 112 is bigger than that of the proximal plate-like projection 11. In the embodiment, there are two positioning proximal plate-like projection 112 disposed on the proximal sides for positioning the dental implant 2. And it would be easier to keep the dental implant in the bone with correct direction after surgery.

Furthermore, the proximal plate-like projections comprise at least one pulling proximal plate-like projection 112. In the embodiment, the positioning proximal plate-like projection is the pulling proximal plate-like projection. The length of the pulling proximal plate-like projection 112 is higher than that of the proximal plate-like projection 11, and the pulling proximal plate-like projection 112 extends to the neck 10. The pulling proximal plate-like projection 112 has a pulling hole 116 for receiving a pulling device to pull the dental implant 2. Besides, The pulling proximal plate-like projection may have a pulling groove for receiving a pulling device to pull the dental implant.

The proximal plate-like projections 11 comprise at least one normal proximal plate-like projection 113. In the embodiment, the length of the normal proximal plate-like projection 113 is lower than that of the pulling proximal plate-like projection 112; and the width of the normal proximal plate-like projection 113 is smaller than that of the positioning proximal plate-like projection 112. That is, the width of the normal proximal plate-like projection 113 is equal to the outer diameter of the fin 20.

The proximal plate-like projections 11 comprise at least one small proximal plate-like projection 114. In the embodiment, the length of the small proximal plate-like projection 114 is lower than that of the normal proximal plate-like projection 113; and the width of the small proximal plate-like projection 114 is smaller than that of the normal proximal plate-like projection 113.

Therefore, the length of the proximal plate-like projections 11 is gradually lower from the pulling proximal plate-like projection 112 to the small proximal plate-like projection 114, and the width of the proximal plate-like projections 11 is gradually small from the positioning proximal plate-like projection 112 to the small proximal plate-like projection 114.

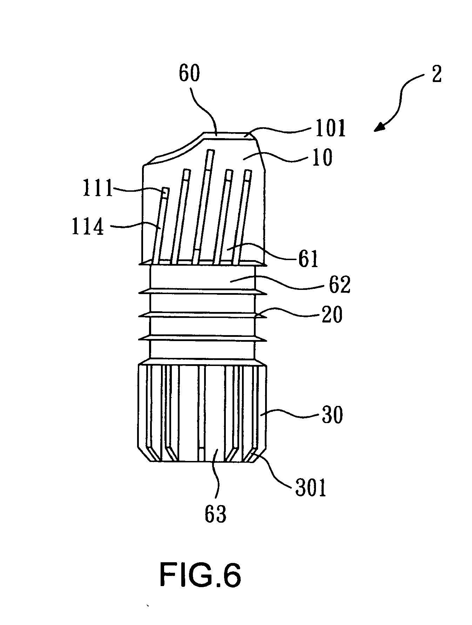

The upper proximal plate-like projection has an angle corresponding to the longitudinal axis of the dental implant. In the first embodiment, the angle of the plate-like projection is 0 degree. However, the angle of the proximal plate-like projection could be between 0 degree to 45 degrees as shown in FIG. 6. That is, the proximal plate-like projections 11 have a declined angle between 0 degree to 45 degrees.

Next to the plate-like projections 11, the fin 20 projects from the second section 62 of the central portion 60 along the horizontal direction. In the embodiment, a plurality of fins are circularly mounted on the peripheral of the second section 62 of the central portion 60. The fins 20 are not tapered. The length of the second section 62 with the fins is about 1/5 to 1/2 of the length of the central portion 60.

The lower proximal plate-like projection 30 is disposed on the third section 63 of the central portion 60. The length of the third section 63 with the lower proximal plate-like projection is about 1/4 to 2/5 of the total length of the central portion 60. The projecting angels of the lower proximal plate-like projection are suggested to be perpendicular to the tangent of the central portion 60. The lower proximal plate-like projection 30 has a pruned lower edge 301. Near a bottom 31 of the central portion 60, the edges of the plate-like projections 30 are pruned to match the bottom of the bony socket; that is, to match the shape of the drill.

The central portion 60 further comprises the bottom 31 and a well 13. The bottom 31 is flat. The well 13 is going to be connected to the abutment and has an opening at the top of the central portion 60.

Referring to FIGs. 3a, 3b, 3c, 3d and 3e, the dental implant 3 comprises: a central portion 70, at least one proximal plate-like projection 41 and at least one fin 50. The central portion 70 has a first section 71, a second section 72, a horizontal direction and a vertical direction. The central portion 70 further comprises a neck 40 disposed on the first section 71. The neck 40 of the second embodiment is similar to the neck 10 of the first embodiment. But the neck 40 here is shorter. The neck 40 comprises a rim 401. The rim 401 is flat or is less trimmed. The length of the neck 40 is between 0.5 to 2mm and the depth of trimming rim is suggested to be 0.5 to 1.2 mm.

The proximal plate-like projection 41 projects from the first section 71 of the central portion 70 along the horizontal direction, and extends along the vertical direction. The proximal plate-like projections 41 and the clearances 42 on buccal and lingual sides are also similar to the previous description in the first embodiment. But the ratio differs. The length of the first section 71 with the proximal plate-like projection 41 is about 1/6 to 2/5 of the total length of the central portion 70. The positioning proximal plate-like projection and the pulling proximal plate-like projection 412 is similar to the previous description in the first embodiment.

The fin 50 projects from the second section 72 of the central portion 70 along the horizontal direction. The central portion 70 further comprises a bottom 51 and a well 43. The fins 50 go down to the bottom 51 without shrinking their diameters. The bottom 51 is concave. The bone at the bottom receives a lot of compression force. The concave bottom 51 disperses the force. This is especially important for the short dental implant with large diameter. It needs the drill specially designed to shape the bottom of the bony socket if any length deeper is crucial.

While the embodiments of the present invention have been illustrated and described, various modifications and improvements can be made by those skilled in the art. The embodiments of the present invention are therefore described in an illustrative, but not restrictive, sense. It is intended that the present invention may not be limited to the particular forms as illustrated, and that all modifications which maintain the spirit and scope of the present invention are within the scope as defined in the appended claims.

## Claims

1. A dental implant (2, 3), comprising:
a central portion (60, 70), having a first section (61, 71), a second section (62, 72), a horizontal direction and a vertical direction;
at least one fin (20, 50), projecting from the second section (62, 72) of the central portion (60, 70) along the horizontal direction;
**characterized in that:**
at least one proximal plate-like projection (11, 41), projecting from the first section (61, 71) of the central portion (60, 70) along the horizontal direction and extending along the vertical direction, the proximal plate-like projection (11, 41) having a pruned upper edge (111).

2. The dental implant (2) according to claim 1, wherein the proximal plate-like projections (11, 41) comprise at least one upper proximal plate-like projection (11) and at least one lower proximal plate-like projection (30), the central portion (60) further comprises a third section (63), the upper proximal plate-like projection (11) is disposed on the first section (61) and the lower proximal plate-like projection (30) is disposed on the third section (63).

3. The dental implant (2) according to claim 2, wherein the length of the first section (61) with the upper proximal plate-like projection (11) is about 1/4 to 2/5 of the total length of the central portion (60).

4. The dental implant (2) according to either claim 2 or claim 3, wherein the length of the third section (63) with the lower proximal plate-like projection (30) is about 1/4 to 2/5 of the total length of the central portion (60).

5. The dental implant (2) according to any one of claims 2 to 4, wherein the lower proximal plate-like projection (30) has a pruned lower edge (301).

6. The dental implant (2, 3) according to any one of the preceding claims, wherein the length of the first section (61, 71) with the proximal plate-like projection (11, 41) is about 1/6 to 2/5 of the total length of the central portion (60).

7. The dental implant (2, 3) according to any one of the preceding claims, the central portion (60, 70) further comprises a neck (10, 40) disposed on the first section (61,71), the height of the neck (10, 40) is about 0.5mm to 3.0mm.

8. The dental implant (2, 3) according to claim 7, wherein the neck (10, 40) has a trimming rim (102, 401).

9. The dental implant (2, 3) according to claim 8, wherein the trimming rim (102, 401) of the neck (10, 40) is trimmed from a proximal side toward a buccal side to make concave slopes which simulate the curvature of buccal gingiva.

10. The dental implant (2, 3) according to either claim 8 or claim 9, wherein the depth of the trimming rim (102, 401) is between 0.5mm to 2mm.

11. The dental implant (2, 3) according to any one of the preceding claims, wherein the length of the second section (62, 72) with the fins (20, 50) is about 1/5 to 1/2 of the total length of the central portion (60, 70).

12. The dental implant (3) according to any one of the preceding claims, wherein the central portion (70) further comprises a concave bottom (51).

13. The dental implant (2, 3) according to any one of the preceding claims, wherein the proximal plate-like projections (11, 41) comprise at least one positioning proximal plate-like projection (112, 412), the positioning proximal plate-like projection (112, 412) extends outside the outer diameter of the fin (20, 50).

14. The dental implant (2, 3) according to any one of the preceding claims, wherein the proximal plate-like projections (11, 41) further comprise at least one pulling proximal plate-like projection (112, 412) and at least one normal proximal plate-like projection (113), the length of the pulling proximal plate-like projection (112, 412) is greater than that of the normal proximal plate-like projection (113), the pulling proximal plate-like projection (112, 412) has a pulling hole (116).

15. The dental implant according to claim 14, wherein the proximal plate-like projections (11, 41) further comprise at least one small proximal plate-like projection (114), the length of the small proximal plate-like projection (114) is smaller than that of the normal proximal plate-like projection (113); and the width of the small proximal plate-like projection (114) is smaller than that of the normal proximal plate-like projection (113).
